# EUROPEAN PATENT SPECIFICATION

(11) **EP 2 022 955 B1**
(45) Date of publication and mention of the grant of the patent: **03.12.2014**
(21) Application number: 08252486.9
(22) Date of filing: 22.07.2008
(51) Int. Cl.: F01N 3/30, F01N 3/34, F02F 1/24, F02F 1/42

(54) **Engine**
Motor
Moteur

(30) Priority: 23.07.2007 JP 2007191120
(43) Date of publication of application: 11.02.2009
(73) Proprietor: Yamaha Hatsudoki Kabushiki Kaisha, Shizuoka-ken Shizuoka 438-8501 (JP)
(72) Inventor: Masuda, Tatsuya, Iwata-shi, Shizuoka-ken, 438-8501 (JP); Saitou, Michio, Iwata-shi, Shizuoka-ken, 438-8501 (JP)
(74) Representative: Moreland, David

(56) References cited:
- CN-Y- 2 821 182
- JP-A- 9 324 624
- JP-A- 2002 303 132
- JP-A- 2004 068 733

## Description

### FIELD OF THE INVENTION

The present invention relates to an engine, such as a motorcycle engine, in which secondary air is introduced into an exhaust passage via an air volume control valve.

### BACKGROUND TO THE INVENTION

JP-A-11-311121, for example, describes a known water-cooled, single cylinder, four-stroke engine for a motorcycle, which has a cylinder that is generally oriented in a forward direction of a vehicle body.

This cylinder includes a cylinder body attached to a front end of a crank case, and a cylinder head attached to a front end of the cylinder body. An intake pipe is attached to an upper section of the cylinder head, and an exhaust pipe is attached to a lower section of the cylinder head.

The engine described in JP-A-11-311121 is provided with a secondary air supply device to introduce secondary air into an exhaust passage. The secondary air supply device includes a secondary air passage that connects the inside of an air cleaner with the inside of the exhaust pipe, and an air volume control valve and a check valve that are provided in the secondary air passage.

The secondary air passage is formed by a hose, a pipe, or the like, and is provided in the vicinity of the outside of the cylinder. The air volume control valve is structured such that its opening degree becomes smaller as an intake negative pressure increases, and is attached to an upper end of an outside wall positioned on the vehicle body right side of the cylinder body. The check valve is formed by a lead valve, and allows secondary air to flow only to the downstream side (the exhaust passage side).

The check valve is provided in the air volume control valve such that it is positioned on the downstream side of a valve body of the air volume control valve.

A secondary air inlet of the air volume control valve is connected to the air cleaner via a pipe. A secondary air outlet of the air volume control valve (an outlet of the lead valve) is connected to an upstream end of the exhaust pipe via a pipe.

The engine described in JP-A-11-311121, however, uses the pipe to connect the air volume control valve and the exhaust pipe. Accordingly, there is a problem that the number of components is increased, resulting in increased manufacturing cost.

Another example is described by CN2821182, which describes an engine that comprises a hose extending from an air control valve that is provided externally of the cylinder head and connecting to a port/nipple on the cylinder head to communicate with an exhaust passage.

A further example is provided by JP2002-303132, which teaches of a head cover provided on a cylinder head of a cylinder. A secondary air supply device comprising a check valve is mounted on the head cover.

Another example is provided in JP2004-068733, which describes a lead valve that is provided in a head cover and a secondary air control valve arranged opposite the head cover. The head cover is in turn attached to the cylinder head. Secondary air passages are provided in the cylinder-head cover and cylinder head. The secondary air passage in the cylinder head communicates with an exhaust port formed in the cylinder head. A gasket is interposed between the cylinder-head cover and the cylinder head. The lead valve is in communication with the secondary air passage provided in the head cover.

JP09-324624 describes an engine in which a head cover is provided on top of a cylinder head. A lead valve covering is fixed with two bolts to the head cover to form a lead valve chest. A pair of lead valves are provided in the lead valve chest. An upstream passage is formed in the cylinder head cover so as to communicate with the lead valve chest. The upstream passage is connected to a downstream passage that is formed in the head cover by a dowel pin that spans an interface between the cylinder head and the head cover. The downstream passage is in communication with exhaust port.

The invention has been devised to solve the above-described problem, and it is an object of the invention to provide an engine in which the number of pipes used for a secondary air supply device is reduced to lower manufacturing cost.

### SUMMARY OF THE INVENTION

According to the present invention there is provided an engine according to claim 1.

The air volume control valve arrangement may include an air volume control valve and a check valve. The air volume control valve and the check valve may be provided on the cylinder head.

The passage hole may be formed in the cylinder head by drilling. Alternatively, or additionally, the hole may be formed by casting or the like.

The check valve may be attached to the cylinder head.

The check valve may be attached to the air volume control valve. The check valve may be supported by the cylinder head via the air volume control valve.

The engine may further comprise a heat insulating member provided between the air volume control valve and the cylinder head. The check valve may be attached to the heat insulating member.

The engine may further comprise a fire protection member. The fire protection member may be provided in the vicinity of the air volume control valve arrangement. The fire protection member may be adapted to prevent flames entering the air volume control valve arrangement. The fire protection member may be provided in the vicinity of a downstream side of the air volume control valve arrangement. The fire protection member may be provided in the vicinity of the check valve, wherein the fire protection member is adapted to inhibit entry of flame to a check valve side.

Amounting surface on which the air volume control valve is intended to be mounted and a mounting surface on which an intake pipe is intended to be mounted may be formed on the cylinder head. The mounting surfaces for the air volume control valve and the mounting surface for the intake pipe may be located on the same plane.

The air volume control valve arrangement may be disposed at an upper section of the cylinder head. A section of the secondary air passage on a downstream side of the air volume control valve arrangement may extend downward from said valve arrangement and be connected to the exhaust passage.

The air volume control valve arrangement may be provided on an upper surface of the cylinder head. The exhaust passage may be provided on a lower side of the cylinder head.

The air volume control valve arrangement may be provided on an upper surface of the cylinder head that is directed upward and to the rear.

According to the invention, secondary air is introduced to the exhaust passage in the cylinder head via the air volume control valve and the passage hole in the cylinder head. Accordingly, compared to an engine in which the air volume control valve and the exhaust passage are connected by a pipe, the engine of the invention does not require the pipe. As a result, according to the invention, the number of pipes used for the secondary air supply device is reduced. Thus, the engine can be provided at lower manufacturing cost.

The engine may be structured such that the check valve is attached to the cylinder head.

The air volume control valve may be formed to be compact, compared to when the check valve is provided to the air volume control valve. Therefore, according to the invention, it is possible to provide a compact engine because the air volume control valve does not protrude significantly to the outside from the cylinder head.

The engine may be structured such that the check valve is attached to the air volume control valve, and supported by the cylinder head via the air volume control valve.

Thus, once the check valve and the air volume control valve have been assembled together, these valves may be attached to the cylinder head in a single operation, or detached from the cylinder head in a single operation.

Therefore, during the maintenance of the air volume control valve and the check valve, these valves can be easily attached to or detached from the cylinder head.

The engine may be structured such that a heat insulating member is provided between the air volume control valve and the cylinder head.

Thus, because the heat of the cylinder head is not easily transmitted to the air volume control valve, it is not necessary to use a component having a high heat resistance as the structural component for the air volume control valve. Therefore, the air volume control valve can be formed using an inexpensive commercially available component. As a result, the engine can be provided at lower manufacturing cost.

The engine may be structured such that the check valve is attached to the heat insulating member.

Thus, the check valve and the heat insulating member can be formed as a single unit such that a section of the check valve faces the inside of the heat insulating member. Accordingly, the check valve can be assembled utilizing a dead space that is formed inside the heat insulating member and that has a width similar to the thickness of the heat insulating member. Thus, according to the invention, in spite of the provision of the heat insulating member, it is possible to attach the air volume control valve to the cylinder head such that it does not significantly protrude from the cylinder head.

The engine may be structured such that a fire protection member that inhibits entry of flame to a check valve side is provided in the vicinity of a downstream side of the check valve.

Thus, the check valve is not exposed to flames. Therefore, it is not necessary to use a special valve as the check valve. Accordingly, an inexpensive commercially available valve, for example, a lead valve can be used as the check valve. Thus, the engine can be provided at lower manufacturing cost.

The engine may be structured such that a mounting surface on which the air volume control valve is mounted, and a mounting surface on which an intake pipe is mounted are formed on the cylinder head. The mounting surface for the air volume control valve and the mounting surface for the intake pipe are located on the same plane.

Thus, the mounting surface for the air volume control valve can be processed during the machining process of the mounting surface for the intake pipe. Thus, according to the invention, the machining of the mounting surface for the air volume control valve can be performed more easily than when just the mounting surface for the air volume control valve is formed in a separate process from processes for mounting surfaces of other components. Thus, the engine can be provided at even lower manufacturing cost.

The engine may be structured such that the check valve is disposed at an upper section of the cylinder head, and a section of the secondary air passage on a downstream side of the check valve extends downward from the check valve and is connected to the exhaust passage.

Thus, when water content in exhaust gas condenses in the vicinity of the check valve, the water is discharged to the exhaust passage through the secondary passage without collecting in the check valve. Thus, according to the invention, it is possible to inhibit the check valve from being corroded by the condensed water generated from the water content in the exhaust gas.

A motorcycle engine may define a motorcycle engine. In such a the motorcycle engine, the check valve may be provided on an upper surface of a cylinder head, and an exhaust passage is provided on a lower side of the cylinder head.

Thus, the secondary air passage that connects the check valve and the exhaust passage passes across the cylinder head. As a result, the water formed by condensation of the water content in the exhaust gas is less likely to come into contact with the check valve.

The engine, based on the motorcycle engine identified above, may be structured such that an air volume control valve and the check valve are provided on an upper surface of the cylinder head that is directed upward and to the rear.

Thus, the cylinder head is located between the air volume control valve and the check valve, and the front wheel. As a result, small stones and other matter that are thrown up by the front wheel are unlikely to hit the air volume control valve and the check valve, because the cylinder head blocks them. Thus, according to the invention, it is possible to protect the air volume control valve and the check valve from the small stones and other matter.

### BRIEF DESCRIPTION OF THE DRAWINGS

These and other aspects of the present invention will now be described, by way of example only, with reference to the accompanying drawings, in which:
FIG. 1 is an enlarged side view of a cylinder and an intake system of an engine according to the invention;
FIG. 2 is a vertical cross sectional view of a section of a cylinder body and a cylinder head;
FIG. 3 is a perspective view of an air volume control valve and an intake pipe that are provided on the cylinder head, when viewed from the cylinder body side;
FIG. 4 is a front view of the cylinder head when viewed from the front of a vehicle body;
FIG. 5 is a plan view of the cylinder head with the intake pipe removed;
FIG. 6 is a cross sectional view of the air volume control valve and a section of the cylinder head along line VI-VI in FIG. 5;
FIG. 7 is a cross sectional view showing another embodiment in which a lead valve is attached to the cylinder head; and
FIG. 8 is a cross sectional view showing another embodiment in which the lead valve is attached to the air volume control valve.

### DETAILED DESCRIPTION OF THE DRAWINGS

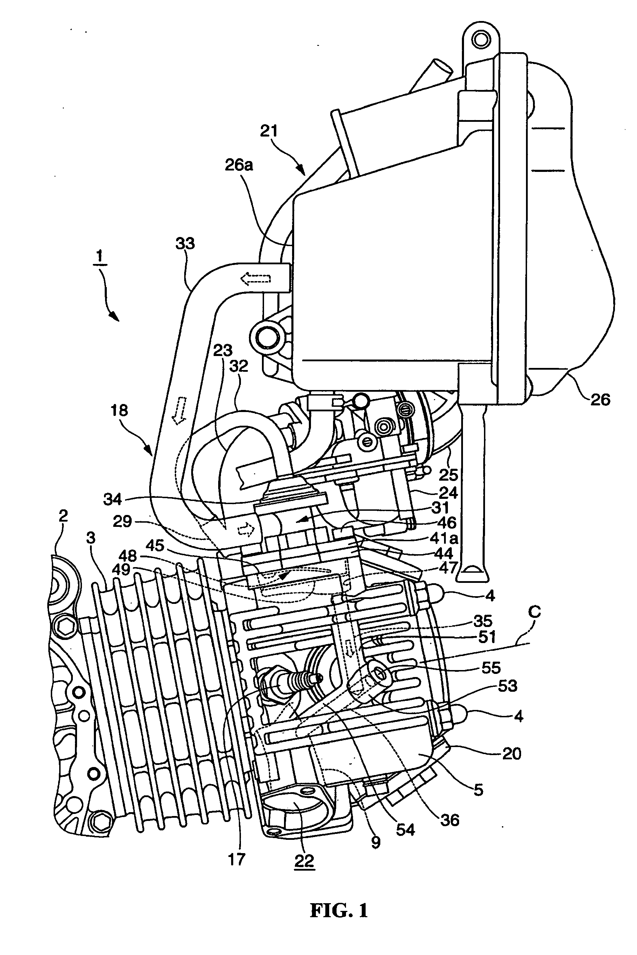

Hereinafter, an embodiment of an engine according to the invention will be described in detail with reference to FIG. 1 to FIG. 6.

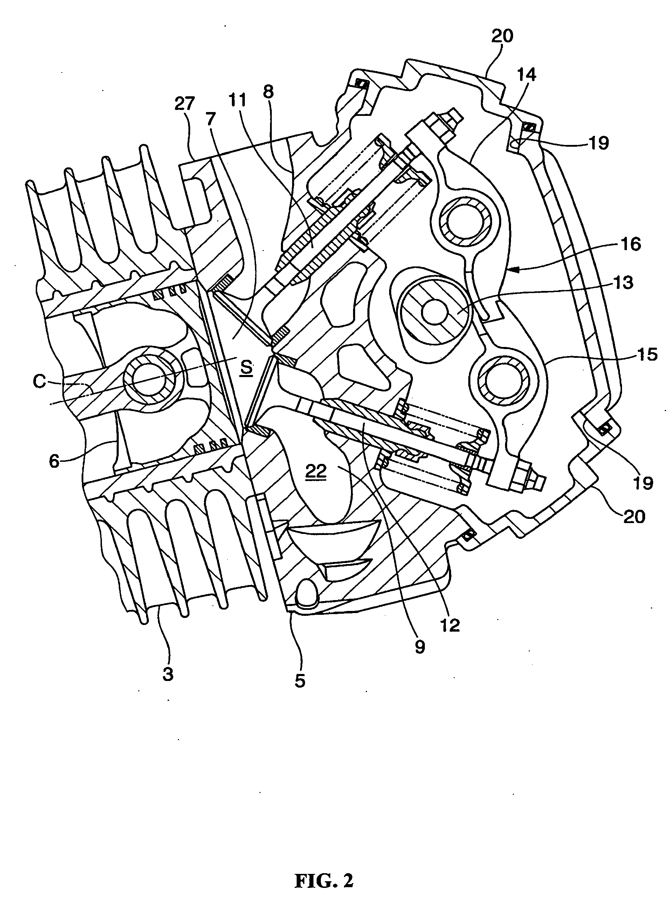

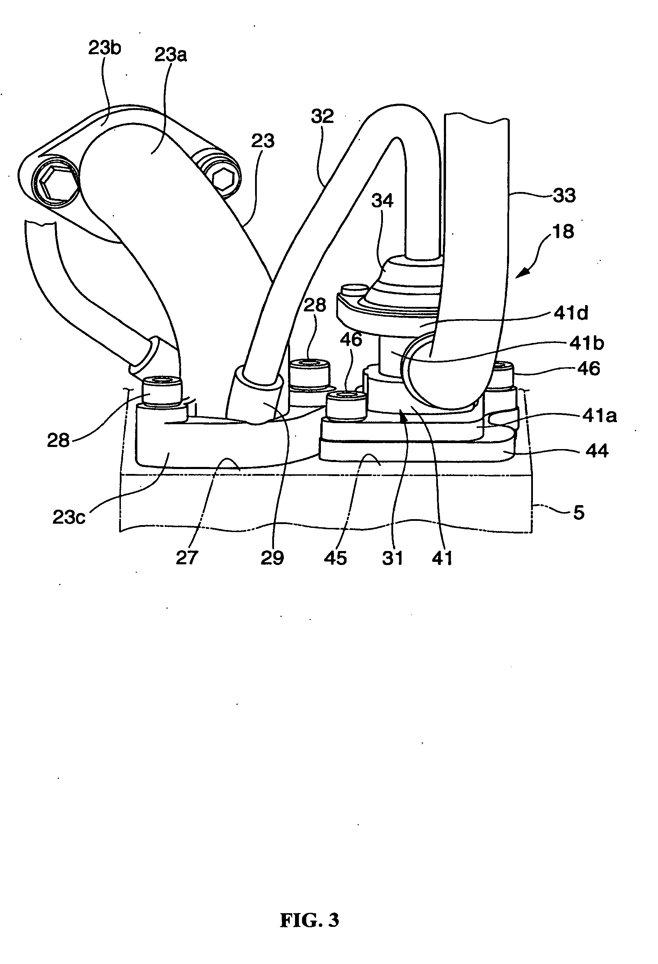

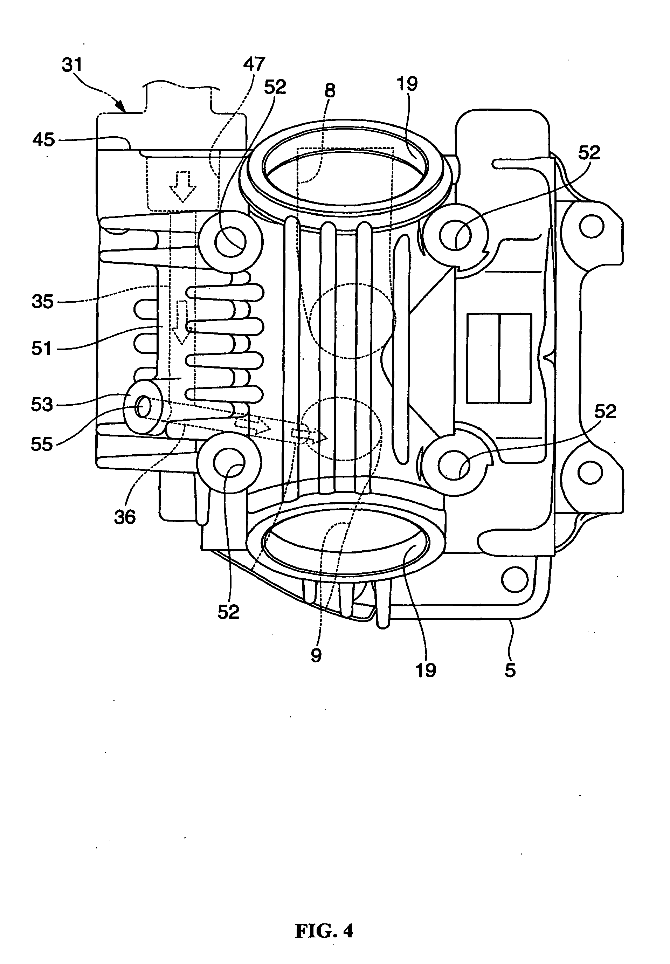

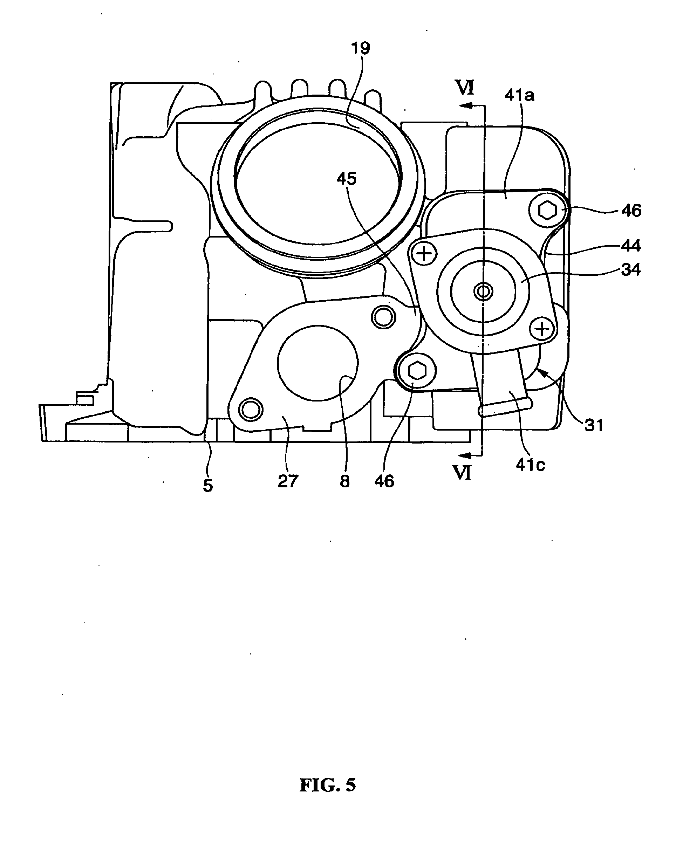

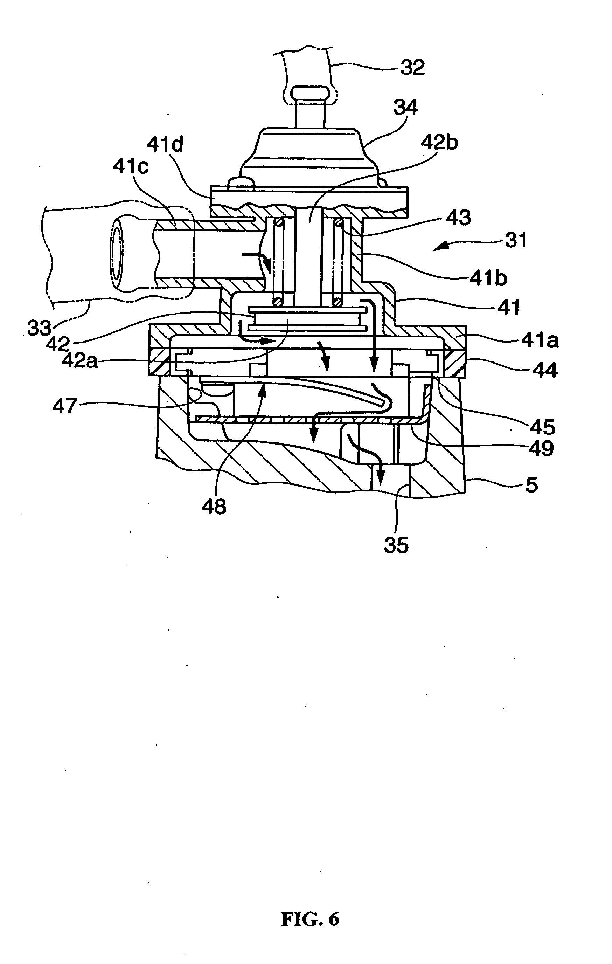

FIG. 1 is an enlarged side view of a cylinder and an intake system of the engine according to the invention. FIG. 2 is a vertical cross sectional view of a section of a cylinder body and a cylinder head. FIG. 3 is a perspective view of an air volume control valve and an intake pipe that are provided on the cylinder head, when viewed from the cylinder body side. FIG. 4 is a front view of the cylinder head when viewed from the front of a vehicle body. FIG. 5 is a plan view of the cylinder head with the intake pipe removed. FIG. 6 is a cross sectional view of the air volume control valve and a section of the cylinder head along line VI-VI in FIG. 5.

In these figures, reference numeral 1 denotes an engine according to this embodiment. The engine 1 is an air-cooled, single cylinder, four-stroke engine for a motorcycle. As shown in FIG. 1, the engine 1 includes a cylinder body 3 that is attached to a crank case 2, and a cylinder head 5 that is attached to an end (a front end) of the cylinder body 3 using four head bolts 4.

The engine 1 is mounted on a vehicle body frame (not shown in the figures) of the motorcycle, with an axial line C of the cylinder being generally oriented in a forward direction of the vehicle body. The motorcycle is provided with a front wheel (not shown in the figures) in front of the engine 1.

As shown in FIG. 2, a recess 7 that forms, along with a piston 6, a combustion chamber S, and an intake port 8 and an exhaust port 9 each having one end that opens to the recess 7, are formed in the cylinder head 5.

Further, the cylinder head 5 includes a valve operating system 16, a spark plug 17 (refer to FIG. 1), a secondary air supply device 18 to be described later, and the like. The valve operating system 16 includes an intake valve 11, an exhaust valve 12, a cam shaft 13 that drives these valves, rocker arms 14, 15, and the like. Furthermore, circular holes 19 for tappet adjustment are respectively formed above the intake valve 11 and below the exhaust valve 12 in the cylinder head 5 as shown in FIG. 2, FIG. 4, and FIG. 5. The circular holes 19 are closed by covering members 20.

The intake port 8 is formed in an upper section of the cylinder head 5 such that it opens upward, and is connected to an intake system 21 (refer to FIG. 1) that is attached to the upper section of the cylinder head 5. The exhaust port 9 is formed in a lower section of the cylinder head 5 such that it extends diagonally downward and opens to the right side of the vehicle body, and is connected to an exhaust pipe (not shown in the figures) that is attached to the lower section of the cylinder head 5. In this embodiment, an exhaust passage 22 in the exhaust port 9 forms an exhaust passage of the invention.

As shown in FIG. 1, the intake system 21 includes a carburetor 24 that is attached to the upper section of the cylinder head 5 via an intake pipe 23, and an air cleaner 26 that is attached to an upstream end of the carburetor 24 via an intake duct 25.

The intake pipe 23 is an integrally molded product made of an aluminum alloy. As shown in FIG. 3, the intake pipe 23 includes an intake pipe body 23a formed by a pipe, and mounting flanges 23b, 23c that are respectively provided on opposite ends of the intake pipe body 23a. The intake pipe body 23a is formed in an L shape when viewed from the side so that the upstream end is oriented to the front of the vehicle body when the mounting flange 23c on the downstream end is attached to the cylinder head 5.

As shown in FIG. 3 and FIG. 5, the mounting flange 23c located on the downstream end of the intake pipe 23 is attached to the cylinder head 5 via a mounting bolt 28, such that the mounting flange 23c is disposed on an intake pipe mounting surface 27 formed on the upstream end of the cylinder head 5. As shown in FIG. 1 and FIG. 3, a pipe joint 29 is formed integrally with the mounting flange 23c. A negative pressure supply pipe 32 of an air volume control valve 31, which will be described later, is connected to the pipe joint 29.

The carburetor 24 is attached to the mounting flange 23b located on the upstream end of the intake pipe 23, and is positioned in the vicinity of the upper section of the cylinder head 5.

The air cleaner 26 is formed to extend in the vehicle width direction above the cylinder head 5 and the carburetor 24, and is supported by the vehicle body frame (not shown in the figures).

As shown in FIG. 1, in order to introduce secondary air to the air volume control valve 31 described later, a secondary air hose 33 is attached to a vertical wall 26a that is located at an end of the air cleaner 26 on the vehicle body rear side. The secondary air hose 33 is connected to an air chamber on the downstream side of an air cleaner element (not shown in the figures) in the air cleaner 26.

The secondary air supply device 18 introduces secondary air into the exhaust passage 22 of the cylinder head 5, and burns unburned components in exhaust gas, thereby purifying the exhaust gas. As shown in FIG. 1 and FIG. 3, the secondary air supply device 18 includes the air volume control valve 31 attached to the cylinder head 5, the secondary air hose 33 for introducing secondary air from the air cleaner 26 to the air volume control valve 31, the negative pressure supply pipe 32 for introducing intake negative pressure to an actuator 34 of the air volume control valve 31, first and second passage holes 35, 36 for introducing secondary air from the air volume control valve 31 into the exhaust port 9. The secondary air hose 33, the first and second passage holes 35, 36, etc. form the secondary air passage of the invention.

As shown in FIG. 6, the air volume control valve 31 includes a valve housing 41, a valve body 42 that is provided in the valve housing 41 such that it can move in directions toward and away from the cylinder head 5, a compression coil spring 43 that urges the valve body 42 in an opening direction (in the direction toward the cylinder head 5, i.e., downward in FIG. 6), and the actuator 34 that moves the valve body 42 in a closing direction in resistance to the spring force of the compression coil spring 43.

The valve housing 41 is formed by integral molding. As shown in FIG. 6, the valve housing 41 includes a mounting flange 41a that is attached to the cylinder head 5 via a heat insulating member 44, a cylindrical section 41b that houses the valve body 42, a connection pipe 41c that protrudes laterally from the cylindrical section 41b, and a diaphragm support plate 41d that is located at an upper end of the cylindrical section 41b (an opposite end to the cylinder head 5).

The valve housing 41 is attached to an air volume control valve mounting surface 45 of the cylinder head 5 using two mounting bolts 46 (refer to FIG. 1, FIG. 3, and FIG. 5), such that the heat insulating member 44 is sandwiched between the mounting surface 45 and the valve housing 41 as shown in FIG. 6. As shown in FIG. 1 and FIG. 3 to FIG. 5, the air volume control valve mounting surface 45 is located at an upper end of the cylinder head 5, and at the end on the left side of the vehicle body. The air volume control valve mounting surface 45 is formed to be coplanar with the intake pipe mounting surface 27.

In addition, the air volume control valve mounting surface 45 is formed to surround a recess 47 for housing a lead valve 48 of the cylinder head 5 as shown in FIG. 6. The air volume control valve mounting surface 45 and the intake pipe mounting surface 27 are formed in the same machining process using the same tool so as to be located on the same plane.

The heat insulating member 44 is formed using a plastic material having a high heat resistance, and has a frame-like shape that is generally aligned with the outline of the mounting flange 41a. The heat insulating member 44 and the valve housing 41 are tightened together and attached to the cylinder head 5.

The lead valve 48, which is arranged to only allow secondary air to flow from the inside of the air volume control valve 31 to the inside of the recess 47 is fitted and attached to the inside of the heat insulating member 44 according to this embodiment. The lead valve 48 opens when the pressure in the recess 47 becomes lower than the pressure in the air volume control valve 31. The lead valve 48 forms a check valve of the invention.

The lead valve 48 is attached to the heat insulating member 44 by fitting the lead valve 48 into a through hole formed in the heat insulating member 44. The lead valve 48 is fixed to the cylinder head 5 together with the heat insulating member 44 such that a section of the lead valve 48 faces the inside of the recess 47. The lead valve 48 is sandwiched between the cylinder head 5 and the valve housing 41, by attaching the heat insulating member 44 and the valve housing 41 to the cylinder head 5. That is, by fitting the lead valve 48 into the through hole of the heat insulating member 44, the movement of the lead valve 48 is restricted in the left-right direction in FIG. 6, and in the direction orthogonal to the plane of the sheet of FIG. 6. Further, by being sandwiched between the cylinder head 5 and the valve housing 41, the movement is restricted in the upward-downward direction in FIG. 6.

As shown in FIG. 6, a fire protection member 49 is provided in the recess 47 in the downstream vicinity of the lead valve 48. The fire protection member 49 is formed by a punched plate, and blocks flames passing from the inside of the exhaust port 9 to the air volume control valve 31 side through the passage holes 35, 36 in the recess 47, thereby preventing the lead valve 48 from being exposed to flames.

The connection pipe 41c is connected to the air cleaner 26 via the secondary air hose 33.

The valve body 42 is formed by a circular plate 42a and a valve shaft 42b, and opens and closes one end (an end at the cylinder head 5 side) of the cylindrical section 41b. The valve shaft 42b connects a diaphragm (not shown in the figures) of the actuator 34 described later, and the circular plate 42a.

Although not shown in the figures, the inside of the actuator 34 is divided by the diaphragm into a negative pressure chamber and an atmospheric pressure chamber. The negative pressure chamber is connected to an intake passage in the intake pipe 23 via the negative pressure supply pipe 32. That is, negative pressure in the intake pipe 23 moves the diaphragm, and thereby the actuator 34 moves the valve body 42 in the closing direction in opposition to the spring force of the compression coil spring 43.

The first passage hole 35 and the second passage hole 36 are respectively drilled in the cylinder head 5 using a drill (not shown in the figures). As shown in FIG. 1 and FIG. 4, the first passage hole 35 is formed to extend downward from the front end of the recess 47 in a direction perpendicular to the axial direction of the cylinder.

As is apparent from FIG. 1 and FIG. 4, the drilling process of the first passage hole 35 using the drill is performed such that the drill is inserted from the inside of the recess 47 to a first thick wall section 51 formed at the side of the cylinder head 5 on the right side of the vehicle body. As shown in FIG. 4, the first thick wall section 51 is formed to extend in the vertical direction on the right side of the vehicle body (on the left side in FIG. 4) with respect to a head bolt insertion hole 52.

The second passage hole 36 is formed by inserting the drill from a columnar protrusion 53, which is provided at the lower end of the first thick wall section 51, toward the exhaust port 9. The drilling process of the second passage hole 36 using the drill is performed by inserting the dill into a second thick wall section 54 (refer to FIG. 1) that extends diagonally downward and rearward from the columnar protrusion 53 to the left side of the vehicle body.

The second thick wall section 54 is formed at a location near the upper side of the head bolt 4 (refer to FIG. 1) that is positioned at the lower side and at the right side of the vehicle body among the four head bolts 4. As a result of performing the drilling process of the second thick wall section 54, the lower end of the first passage hole 35 is connected to the second passage hole 36. An opening of the second passage hole 36 that is formed in the columnar protrusion 53 is closed by a stopper 55 after the drilling process.

In the engine provided with the secondary air supply device 18 structured as described above, when the opening degree of a throttle valve (not shown in the figures) in the carburetor 24 is smaller than an angle set in advance, the negative pressure in the intake pipe 23 becomes relatively high, and the air volume control valve 31 closes. When the opening degree of the throttle valve exceeds the set opening degree, and the negative pressure in the intake pipe 23 becomes relatively low, the valve body 42 of the air volume control valve 31 is opened by spring force of the compression coil spring 43. The opening degree of the air volume control valve 31 increases or decreases in response to the magnitude of the intake negative pressure (the opening degree of the throttle valve).

When the engine is operating, exhaust pulsation occurs in the exhaust port 9. At this time, a pressure wave that propagates in the exhaust port 9 reaches the recess 47 from the inside of the exhaust port 9 via the first and second passage holes 35, 36. Along with this, the pressure in the recess 47 increases or decreases. The pressure in the recess 47 becomes relatively low with the air volume control valve 31 open. As a result, the lead valve 48 opens.

Since the air volume control valve 31 and the lead valve 48 open in this manner, the inside of the air cleaner 26 is communicated with the exhaust port 9, via the secondary air hose 33, the air volume control valve 31, the lead valve 48, the first and second passage holes 35, 36, etc. That is, at this time, the air in the air cleaner 26 is introduced as secondary air into the exhaust port 9 (the exhaust passage 22 in the cylinder head 5) via the secondary air passage, the air volume control valve 31, and the lead valve 48. The direction in which the secondary air flows at this time is shown by the arrows in FIG. 1, FIG. 4, and FIG. 6.

Accordingly, compared with the known engine in which the air volume control valve and the exhaust passage are connected by a pipe, the engine 1 does not require the pipe. Therefore, according to the embodiment, the number of pipes used in the secondary air supply device 18 is reduced. Thus, the engine 1 can be provided at lower manufacturing cost.

Since the heat insulating member 44 is provided between the air volume control valve 31 and the cylinder head 5 in this embodiment, the heat of the cylinder head 5 is unlikely to transmit to the air volume control valve 31. Therefore, it is not necessary to use a component having a high heat resistance as a structural component for the air volume control valve 31. The air volume control valve 31 can be formed using an inexpensive commercially available component. As a result, the engine 1 can be provided at even lower manufacturing cost.

Since the lead valve 48 is attached to the heat insulating member 44 in this embodiment, these members can be formed as a single unit in which a section of the lead valve 48 faces the inside of the heat insulating member 44. Accordingly, the lead valve 48 can be assembled utilizing a dead space that is formed inside the heat insulating member 44 corresponding to the thickness of the heat insulating member 44. Thus, according to this embodiment, in spite of the provision of the heat insulating member 44, it is possible to attach the air volume control valve 31 to the cylinder head 5 so as not to significantly protrude from the cylinder head 5.

In this embodiment, the fire protection member 49 is provided in the vicinity of the downstream side of the lead valve 48 in order to inhibit flames from entering the lead valve 48 side. Therefore, even if flames enter the passage holes 35, 36, from the exhaust port 9, the lead valve 48 will not be exposed to the flames. Therefore, it is not necessary to use a special valve as the lead valve 48. An inexpensive commercially available valve may be used.

In this embodiment, the air volume control valve mounting surface 45 and the intake pipe mounting surface 27 are formed such that they are located on the same plane. Therefore, the air volume control valve mounting surface 45 can be manufactured during the machining process of the intake pipe mounting surface 27. Thus, according to this embodiment, the manufacturing of the air volume control valve mounting surface 45 can be performed more easily than when just the air volume control valve mounting surface 45 is formed in a separate process from processes for mounting surfaces of other components.

In this embodiment, the lead valve 48 is disposed at the upper section of the cylinder head 5, and a section of the secondary air passage on the downstream side of the lead valve 48 (the first and second passage holes 35, 36) extends downward from the lead valve 48 and is connected to the exhaust port 9 (the exhaust passage). Accordingly, when water content in exhaust gas condenses in the vicinity of the lead valve 48, the water is discharged to the exhaust port 9 through the secondary passage without collecting in the lead valve 48. Thus, according to this embodiment, it is possible to inhibit the lead valve 48 from being corroded by the condensed water generated from the water content in the exhaust gas.

In this embodiment, the lead valve 48 is provided on the upper surface of the cylinder head 5, and the exhaust passage 22 is provided on the lower side of the cylinder head 5. Therefore, according to this embodiment, the secondary air passage (the first and second passage holes 35, 36) that connects the lead valve 48 and the exhaust passage 22 passes across the cylinder head. As a result, the water formed by condensation of the water content in the exhaust gas is less likely to come into contact with the lead valve 48.

In this embodiment, since the air volume control valve 31 and the lead valve 48 are provided on the upper surface of the cylinder head 5 that is directed upward to the rear, the cylinder head 5 is located between the air volume control valve 31 and the lead valve 48, and the front wheel. As a result, small stones and other matter that are thrown up by the front wheel are unlikely to hit the air volume control valve 31 and the lead valve 48, because the cylinder head 5 blocks them. Thus, according to this embodiment, it is possible to protect the air volume control valve 31 and the lead valve 48 from the small stones and other matter.

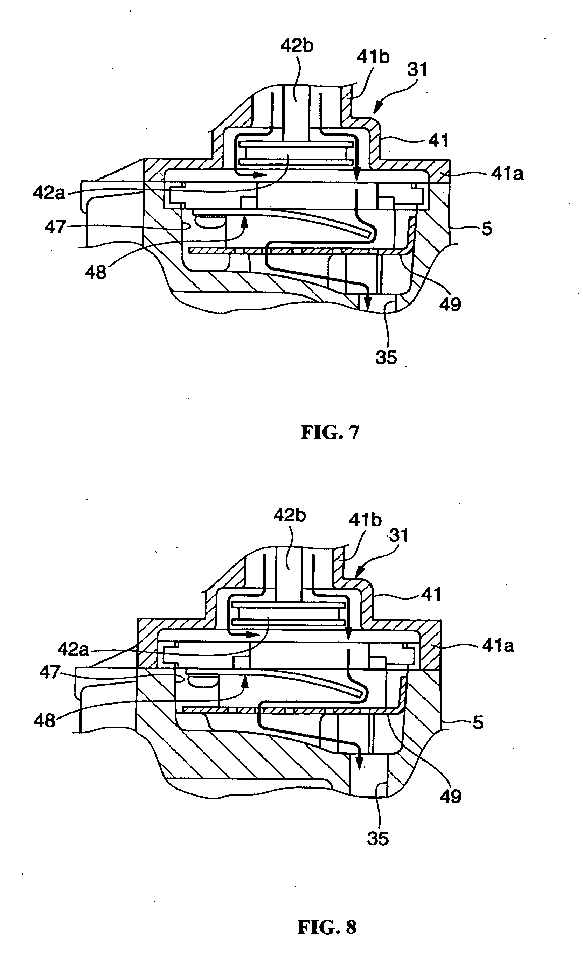

In the above-described embodiment, an example is described in which the lead valve 48 is attached to the heat insulating member 44. However, as shown in FIG. 7 and FIG. 8, the lead valve 48 can be attached to the cylinder head 5, and the air volume control valve 31.

FIG. 7 is a cross sectional view showing another embodiment in which the lead valve is attached to the cylinder head. FIG. 8 is a cross sectional view showing another embodiment in which the lead valve is attached to the air volume control valve. In these figures, structural members that are the same or similar to those explained with reference to FIG. 1 to FIG. 6 are denoted with the same or similar reference numerals, and detailed explanation thereof will be omitted accordingly.

The air volume control valve 31 shown in FIG. 7 is directly attached to the air volume control valve mounting surface 45 of the cylinder head 5.

The lead valve 48 shown in FIG. 7 is attached to the cylinder head 5 such that it is fitted into the recess 47 of the cylinder head 5. Further, the lead valve 48 and the valve housing 41 are structured such that, by attaching the valve housing 41 to the cylinder head 5 with the lead valve 48 fitted into the recess 47, the lead valve 48 is pressed against and fixed to the cylinder head 5 by the valve housing 41.

By adopting this structure, the air volume control valve 31 can be formed to be compact as compared to when the lead valve 48 is provided in the air volume control valve 31, for example. Therefore, according to this embodiment, it is possible to provide a compact engine because the air volume control valve 31 does not significantly protrude from the cylinder head 5.

The lead valve 48 shown in FIG. 8 is attached to the air volume control valve 31, and attached to the cylinder head 5 via the air volume control valve 31.

The lead valve 48 of this embodiment is attached by inserting it into the recess formed in the valve housing 41 of the air volume control valve 31. The lead valve 48 and the cylinder head 5 are structured such that, by attaching the valve housing 41 to the cylinder head 5 with the lead valve 48 fitted into the recess, the lead valve 48 is pressed against and fixed to the cylinder head 5 by the valve housing 41.

By adopting the structure shown in FIG. 8, the air volume control valve 31 and the lead valve 48 can be attached to and detached from the cylinder head 5 as a single unit.

Therefore, during the maintenance of the air volume control valve 31 and the lead valve 48, these valves can be easily attached to or detached from the cylinder head 5.

### Description of the Reference Numerals and Signs

3 ... Cylinder body, 5 ... Cylinder head, 9 ... Exhaust port, 18 ... Secondary air supply device, 23 ... Intake pipe, 24 ... Carburetor, 26 ... Air cleaner, 27 ... Intake pipe mounting surface, 31 ... Air volume control valve, 33 ... Secondary air hose, 35 ... First passage hole, 36 ... Second passage hole, 44 ... heat insulating member, 45 ... Air volume control valve mounting surface, 48 ... Lead valve, 49 ... Fire protection member

## Claims

1. An engine (1) comprising:
a cylinder body (3);
a cylinder head (5) attached to the cylinder body (3);
a secondary air passage in communication with an exhaust passage (9); and
an air volume control valve arrangement provided on the cylinder head (5), wherein the air volume control valve arrangement is in communication with the secondary air passage, **characterised in that**
the secondary air passage downstream of the air volume control valve arrangement is formed by a passage hole (35, 36) in the cylinder head (5), wherein the passage hole (35, 36) connects the air volume control valve arrangement with the exhaust passage (9).

2. The engine (1) according to claim 1, wherein the passage hole (35, 36) is formed in the cylinder head (5) by drilling.

3. The engine (1) according to any preceding claim, wherein the air volume control valve arrangement includes an air volume control valve (31) and a check valve (48).

4. The engine (1) according to claim 3, wherein the air volume control valve (31) and the check valve (48) are provided on the cylinder head (5).

5. The engine (1) according to any one of claims 3 or 4, wherein the check valve (48) is attached to the cylinder head (5).

6. The engine (1) according to any one of claims 3 to 5, wherein the check valve (48) is attached to the air volume control valve (31) and is supported by the cylinder head (5) via the air volume control valve (31).

7. The engine (1) according to any one of claims 3 to 6, further comprising a heat insulating member (44) provided between the air volume control valve (31) and the cylinder head (5).

8. The engine (1) according to claim 7, wherein the check valve (48) is attached to the heat insulating member (44).

9. The engine (1) according to any one of claims 3 to 8, further comprising a fire protection member (49) provided in the vicinity of a downstream side of the check valve (48), wherein the fire protection member (44) is adapted to inhibit entry of flame to a check valve side.

10. The engine (1) according to any one of claims 3 to 9, wherein a mounting surface (45) on which the air volume control valve (31) is mounted and a mounting surface (27) on which an intake pipe (23) is mounted are formed on the cylinder head (5), and wherein the mounting surface (45) for the air volume control valve (31) and the mounting surface (27) for the intake pipe (23) are located on the same plane.

11. The engine (1) according to any one of claims 3 to 10, wherein the check valve (48) is disposed at an upper section of the cylinder head (5), and a section of the secondary air passage on a downstream side of the check valve (48) extends downward from the check valve (48) and is connected to the exhaust passage (9).

12. The engine (1) according to any preceding claim, wherein the air volume control valve arrangement is provided on an upper surface of the cylinder head (5), and the exhaust passage (9) is provided on a lower side of the cylinder head (5).

13. The engine (1) according to any preceding claim, wherein the air volume control valve arrangement is provided on an upper surface of the cylinder head (5) that is directed upward and to the rear.

14. A motorcycle engine formed in accordance with an engine according to any preceding claim.

## Patentansprüche

1. Motor (1), der aufweist:
einen Zylinderkörper (3);
einen Zylinderkopf (5), der am Zylinderkörper (3) angebracht ist;
einen Sekundärluftkanal in Verbindung mit einem Auslasskanal (9); und
eine Luftmengenregelventilanordnung, die am Zylinderkopf (5) vorhanden ist, wobei die Luftmengenregelventilanordnung in Verbindung mit dem Sekundärluftkanal ist, **dadurch gekennzeichnet, dass**
der Sekundärluftkanal stromabwärts von der Luftmengenregelventilanordnung mittels eines Kanalloches (35, 36) im Zylinderkopf (5) gebildet wird, wobei das Kanalloch (35, 36) die Luftmengenregelventilanordnung mit dem Auslasskanal (9) verbindet.

2. Motor (1) nach Anspruch 1, bei dem das Kanalloch (35, 36) im Zylinderkopf (5) durch Bohren gebildet wird.

3. Motor (1) nach einem der vorhergehenden Ansprüche, bei dem die Luftmengenregelventilanordnung ein Luftmengenregelventil (31) und ein Rückschlagventil (48) umfasst.

4. Motor (1) nach Anspruch 3, bei dem das Luftmengenregelventil (31) und das Rückschlagventil (48) am Zylinderkopf (5) vorhanden sind.

5. Motor (1) nach einem der Ansprüche 3 oder 4, bei dem das Rückschlagventil (48) am Zylinderkopf (5) befestigt ist.

6. Motor (1) nach einem der Ansprüche 3 bis 5, bei dem das Rückschlagventil (48) am Luftmengenregelventil (31) befestigt ist und durch den Zylinderkopf (5) mittels des Luftmengenregelventils (31) gestützt wird.

7. Motor (1) nach einem der Ansprüche 3 bis 6, der außerdem ein Wärmeisolierelement (44) aufweist, das zwischen dem Luftmengenregelventil (31) und dem Zylinderkopf (5) vorhanden ist.

8. Motor (1) nach Anspruch 7, bei dem das Rückschlagventil (48) am Wärmeisolierelement (44) befestigt ist.

9. Motor (1) nach einem der Ansprüche 3 bis 8, der außerdem ein Brandschutzelement (49) aufweist, das in der Nähe einer stromabwärts gelegenen Seite des Rückschlagventils (48) vorhanden ist, wobei das Brandschutzelement (49) ausgebildet ist, um den Eintritt der Flamme in eine Rückschlagventilseite zu verhindern.

10. Motor (1) nach einem der Ansprüche 3 bis 9, bei dem eine Montagefläche (45), auf der das Luftmengenregelventil (31) montiert ist, und eine Montagefläche (27), auf der ein Ansaugrohr (23) montiert ist, am Zylinderkopf (5) ausgebildet sind, und bei dem die Montagefläche (45) für das Luftmengenregelventil (31) und die Montagefläche (27) für das Ansaugrohr (23) in der gleichen Ebene angeordnet sind.

11. Motor (1) nach einem der Ansprüche 3 bis 10, bei dem das Rückschlagventil (48) in einem oberen Abschnitt des Zylinderkopfes (5) angeordnet ist und sich ein Abschnitt des Sekundärluftkanals auf einer stromabwärts gelegenen Seite des Rückschlagventils (48) nach unten vom Rückschlagventil (48) erstreckt und mit dem Auslasskanal (9) verbunden ist.

12. Motor (1) nach einem der vorgehenden Ansprüche, bei dem die Luftmengenregelventilanordnung auf einer oberen Fläche des Zylinderkopfes (5) vorhanden ist und der Auslasskanal (9) auf einer unteren Seite des Zylinderkopfes (5) vorhanden ist.

13. Motor (1) nach einem der vorgehenden Ansprüche, bei dem die Luftmengenregelventilanordnung auf einer oberen Fläche des Zylinderkopfes (5) vorhanden ist, die nach oben und nach hinten gerichtet ist.

14. Motor für ein Motorrad, hergestellt in Übereinstimmung mit einem Motor nach einem der vorhergehenden Ansprüche.

## Revendications

1. Moteur (1) comprenant :
un corps de cylindre (3) ;
une culasse (5) fixée au corps de cylindre (3) ;
un passage d'air secondaire en communication avec un passage d'échappement (9) ; et
un agencement formant soupape de régulation de volume d'air fourni sur la culasse (5), l'agencement formant soupape de régulation de volume d'air étant en communication avec le passage d'air secondaire, **caractérisé en ce que**
le passage d'air secondaire en aval de l'agencement formant soupape de régulation de volume d'air est formé par un trou de passage (35, 36) dans la culasse (5), le trou de passage (35, 36) connectant l'agencement formant soupape de régulation de volume d'air avec le passage d'échappement (9).

2. Moteur (1) selon la revendication 1, dans lequel le trou de passage (35, 36) est formé par forage dans la culasse (5).

3. Moteur (1) selon l'une quelconque des revendications précédentes, dans lequel l'agencement formant soupape de régulation de volume d'air comprend une soupape de régulation de volume d'air (31) et un clapet anti-retour (48).

4. Moteur (1) selon la revendication 3, dans lequel la soupape de régulation de volume d'air (31) et le clapet anti-retour (48) sont fournis sur la culasse (5).

5. Moteur (1) selon la revendication 3 ou 4, dans lequel le clapet anti-retour (48) est fixé à la culasse (5).

6. Moteur (1) selon l'une quelconque des revendications 3 à 5, dans lequel le clapet anti-retour (48) est fixé à la soupape de régulation de volume d'air (31) et est porté par la culasse (5) par l'intermédiaire de la soupape de régulation de volume d'air (31).

7. Moteur (1) selon l'une quelconque des revendications 3 à 6, comprenant en outre un élément calorifuge (44) fourni entre la soupape de régulation de volume d'air (31) et la culasse (5).

8. Moteur (1) selon la revendication 7, dans lequel le clapet anti-retour (48) est fixé à l'élément calorifuge (44).

9. Moteur (1) selon l'une quelconque des revendications 3 à 8, comprenant en outre un élément pare-flammes (49) fourni à proximité d'un côté aval du clapet anti-retour (48), l'élément pare-flammes (49) étant adapté pour empêcher une entrée de flamme vers un côté du clapet anti-retour.

10. Moteur (1) selon l'une quelconque des revendications 3 à 9, dans lequel une surface de montage (45) sur laquelle la soupape de régulation de volume d'air (31) est montée et une surface de montage (27) sur laquelle une conduite d'admission (23) est montée sont formées sur la culasse (5), et dans lequel la surface de montage (45) pour la soupape de régulation de volume d'air (31) et la surface de montage (27) pour la conduite d'admission (23) sont situées sur le même plan.

11. Moteur (1) selon l'une quelconque des revendications 3 à 10, dans lequel le clapet anti-retour (48) est disposé au niveau d'une section supérieure de la culasse (5), et une section du passage d'air secondaire sur un côté aval du clapet anti-retour (48) s'étend vers le bas à partir du clapet anti-retour (48) et est connectée au passage d'échappement (9).

12. Moteur (1) selon l'une quelconque des revendications précédentes, dans lequel l'agencement formant soupape de régulation de volume d'air est fourni sur une surface supérieure de la culasse (5), et le passage d'échappement (9) est fourni sur un côté inférieur de la culasse (5).

13. Moteur (1) selon l'une quelconque des revendications précédentes, dans lequel l'agencement formant soupape de régulation de volume d'air est fourni sur une surface supérieure de la culasse (5) qui est dirigée vers le haut et vers l'arrière.

14. Moteur de motocyclette formé conformément à un moteur selon l'une quelconque des revendications précédentes.
